# EUROPÄISCHE PATENTSCHRIFT

(11) **EP 3 033 560 B1**
(45) Veröffentlichungstag und Bekanntmachung des Hinweises auf die Patenterteilung: **08.08.2018**
(21) Anmeldenummer: 14732073.3
(22) Anmeldetag: 06.05.2014
(51) Int. Cl.: F16L 5/10, F16L 5/02, H02G 3/22, E04C 2/52

(54) **WANDDURCHFÜHRUNG**
WALL LEAD-THROUGH
TRAVERSÉE MURALE

(30) Priorität: 15.08.2013 DE 202013103712 U
(43) Veröffentlichungstag der Anmeldung: 22.06.2016
(73) Patentinhaber: Pflitsch GmbH & Co. KG., 42499 Hückeswagen (DE)
(72) Erfinder: SCHWINNING, Ulrike, 42499 Hückeswagen (DE); LECHNER, Martin, 51789 Lindlar (DE)
(74) Vertreter: Köchling, Conrad-Joachim
(86) Internationale Anmeldenummer: PCT/DE2014/100159
(87) Internationale Veröffentlichungsnummer: WO 2015/021959

(56) Entgegenhaltungen:
- WO-A1-2013/024131
- DE-B3-102009 039 865
- DE-U1-202006 006 361
- GB-A- 1 566 641
- NL-C2- 1 001 028

## Beschreibung

Die Erfindung betrifft eine Wanddurchführung zur Verlegung von Langformteilen, Rohren, Leitungen und/oder Kabeln durch Wandungen von Geräten, Gehäusen oder mit Wandungen versehenen Bauteilen, wobei die Wandung eine Durchgangslochung aufweist und an der Wandung ein Flansch mittels Befestigungsmitteln befestigt ist, der eine zur Durchgangslochung koaxiale Lochung aufweist, wobei der Flansch aus zwei seine Lochung mit einer Trennebene mittig kreuzenden Halbflanschteilen besteht, die mittels angeformter Verbindungsmittel miteinander verbunden oder verbindbar sind, und die Halbflanschteile identische Form haben, wobei jedes Halbflanschteil an einer Trennstelle ein erstes Verbindungsmittel und an einer zweiten Trennstelle ein zweites Verbindungsmittel aufweist und die Verbindungsmittel zueinander unterschiedlich aber miteinander in Montagesolllage der Halbflanschteile kompatibel sind.

Zum Zwecke der Ausbildung von solchen Wanddurchführungen sind Vorrichtungen in Form von Doppelnippeln mit endseitigen Gewindestutzen, Dichtkörper und Druckschraube bekannt. Um bei solchen Ausgestaltungen zu ermöglichen, bei bestehenden Installationen beschädigte oder zerstörte Vorrichtungen der angegebenen Art zu ersetzen, ist es bekannt, dass diese aus geteilten Elementen besteht, nämlich einem längsmittig geteilten Doppelnippel, einem längsmittig geteilten Dichteinsatz und einer längsmittig geteilten Druckschraube. Mit einer solchen Ausgestaltung ist es in einfacher Weise möglich, auch bei bestehenden Installationen solche Vorrichtungsteile einzusetzen.

Im Stand der Technik sind aber auch Wanddurchführungen der gattungsgemäßen Art bekannt. Hierbei weist wiederum die Wandung eine Durchgangslochung auf. An der Wandung ist ein zweiteiliger Flansch mittels geeigneter Befestigungsmittel befestigt, der ebenfalls eine Lochung aufweist, die koaxial zur Durchgangslochung ausgerichtet ist. Gegebenenfalls ist ein solcher Flansch wiederum mit einer dessen Lochung umgebenden Dichtung ausgestattet, die durch entsprechende Gestaltung des Flansches beim Befestigen des Flansches, wenn dieser also gegen die Wandung mittels Befestigungsmitteln angezogen wird, eine Verspannung gegen die durch die Lochung geführten Langformteile, Rohre, Leitungen oder Kabel ermöglicht. Eine solche Ausgestaltung ist ebenfalls sehr brauchbar und hilfreich. Allerdings besteht bei bekannten geteilten Flanschen das Problem, dass die Installation eines solchen Flansches sehr aufwändig und schwierig ist, da die Einzelteile gegenüber der Wandung und zueinander nicht ausreichend positioniert und durchgeführt sind.

Aus der DE 20 2006 006 361 U1 ist eine Wanddurchführung gemäß Oberbegriff des Anspruches 1 vorbekannt. Ähnliche Ausgestaltungen sind aus der GB 1 566 641 A, der DE 10 2009 039 865 B3 und der NL 1 001 028 C2 bekannt.

Dadurch, dass der Flansch in zwei Halbflanschteile aufgeteilt ist, besteht die Möglichkeit, diesen Flansch nachträglich bei bestehenden Installationen einzusetzen, da die Halbflanschteile quer zum Verlauf der Langformteile oder dergleichen auf diese aufgesetzt werden können, miteinander verbunden werden können und an dem Wandungsteil befestigt werden können. Darüber hinaus ist aber ganz wesentlich, dass die den Flansch bildenden Halbflanschteile identische Form aufweisen. Hierdurch wird erreicht, dass eine besonders kostengünstige Fertigung realisierbar ist. Es müssen ebenso wie bei der Ausbildung eines einstückigen Flansches nur Werkzeuge für die Herstellung eines Halbflanschteiles zur Verfügung gestellt werden. Auch ist die Lagerhaltung nur eines Halbflanschteiles und die Montage nur identischer Halbflanschteile erforderlich. Dies reduziert den Kostenaufwand bei der Herstellung solcher Teile, die Lagerhaltungskosten und auch den Montageaufwand.

Ausgehend von diesem Stand der Technik liegt der Erfindung die Aufgabe zugrunde, eine Wanddurchführung gattungsgemäßer Art zu schaffen, bei der der Flansch bei der Durchführung von zum Beispiel mit Steckern vormontierten Kabeln oder auch nachträglich bei bestehenden Installationen zum Beispiel als Ersatz eines beschädigten oder zerstörten Flansches auf einfache und sichere Art montiert werden kann, wobei eine besonders kostengünstige Ausgestaltung des entsprechenden Flansches erwünscht ist.

Zur Lösung dieser Aufgabe wird vorgeschlagen, dass die Verbindungsmittel nach Art eines Scharniergelenkes ausgebildet sind, wobei jedes Halbflanschteil an einer ersten Trennstelle seiner beiden Trennstellen einen Scharnierbolzen und an einer zweiten Trennstelle ein Scharnierband aufweist, wobei in Montagesolllage der Scharnierbolzen des jeweils einen Halbflanschteiles in das Scharnierband des jeweils anderen Halbflanschteiles eingreift und die beiden Teile damit verriegelt sind.

Diese Ausgestaltung stellt sicher, dass die beiden Halbflanschteile nach dem manuellen Zusammensetzen der Teile, eine Verbundeinheit bilden, deren Zusammenhalt schon dann sichergestellt ist, wenn diese Teile an die Gehäusewandung oder dergleichen angelegt sind. Die nachfolgende Befestigung mit den Befestigungsmitteln stellt die endgültige Lagesicherung zum Gehäuseteil sicher.

Insbesondere ist bevorzugt vorgesehen, dass in den aus den Halbflanschteilen zusammengesetzten Flansch eine ringartige Dichtung eingesetzt ist, die in Montagesolllage zwischen einer Dicht-Press-Kontur des Flansches, die dessen Lochung umgibt, und dem die Durchgangslochung der Wandung umgebenden Wandungsteil eingespannt ist und in radialer Richtung an das durchgeführte Langformteil oder die durchgeführten Langformteile angepresst ist.

Eine solche ringartige Dichtung ist an sich im Stand der Technik bekannt.

Bevorzugt ist bei dieser Ausbildung, dass die Dichtung aus einem mindestens einmal geschlitzten Ringteil oder aus zwei Halbringteilen besteht, die mit der Trennstelle oder den Trennstellen in Montagesolllage dicht aneinander liegen.

Hierdurch ist zum Beispiel bei Beschädigung des Flansches und/oder der Dichtung nicht nur ein einfacher Ersatz des Flansches, sondern auch ein einfacher Ersatz der Dichtung bei bestehenden Installationen ermöglicht.

Bei der Durchführung von zum Beispiel mit Steckern vormontierten Kabel oder Leitungen ist hierdurch ebenfalls eine sichere und einfache Abdichtung möglich.

Um die richtige Positionierung der Halbflanschteile in der Montagesollposition sicher zu stellen, ist vorgesehen, dass die Trennstelle des Halbflanschteiles an ihrer der Wandung benachbarten Randkante eine Ausnehmung aufweist, in die in Montagesolllage eine Verlängerung des anderen Halbflanschteiles eingreift, die eine Verlängerung einer Führungskontur ist.

Zudem ist bevorzugt vorgesehen, dass an den Trennstellen der Halbflanschteile parallel zur Trennebene gerichtete Wandteile ausgebildet sind, die in der Montagesolllage flächig aneinander liegen und eine Schwenkbegrenzung für das Scharniergelenk bilden.

Auch ist besonders bevorzugt vorgesehen, dass das Scharnierband durch eine zur Vorderseite des Halbflanschteiles, die der Wandung abgewandt ist, offene Lagerschale gebildet ist.

Durch die entsprechende Ausgestaltung ist es zur Montage möglich, die beiden Halbflanschteile zunächst in eine relative Schräglage zueinander zuzuführen und dabei die Scharnierbolzen in die als offene Lagerschale ausgebildete Ausgestaltung des Scharnierbandes einzuführen. Anschließend werden die Teile in die Sollposition verschwenkt, in der sie parallel zueinander ausgerichtet sind. Dabei liegen die in der Trennstelle befindlichen Wandteile flächig aneinander und bilden eine Anschlagbegrenzung oder Einsteckbegrenzung für das Scharniergelenk bzw. für den oben beschriebenen Riegel.

Auch ist bevorzugt vorgesehen, dass der aus den Halbflanschteilen zusammengesetzte Flansch mehrere Durchgangsöffnungen aufweist, die neben der Lochung und achsparallel zu dieser angeordnet sind und in Montagesolllage von den Befestigungsmitteln durchgriffen sind.

Auch kann bevorzugt vorgesehen sein, dass die Befestigungsmittel Schrauben sind.

Aus Gründen der Platzersparnis des Einbauraumes ist vorzugsweise vorgesehen, dass der Flansch in Draufsicht rechteckig, vorzugsweise quadratisch ausgebildet ist, wobei die Befestigungsmittel in den Eckbereichen angeordnet sind.

Ein wesentliches Teil der Erfindung ist in der beigefügten Zeichnung dargestellt und im Folgenden näher beschrieben.

Es zeigt:
- Fig.1: einen aus zwei Halbflanschteilen zusammengesetzten Flansch in isometrischer Ansicht;
- Fig. 2: desgleichen in einer Vormontageposition;

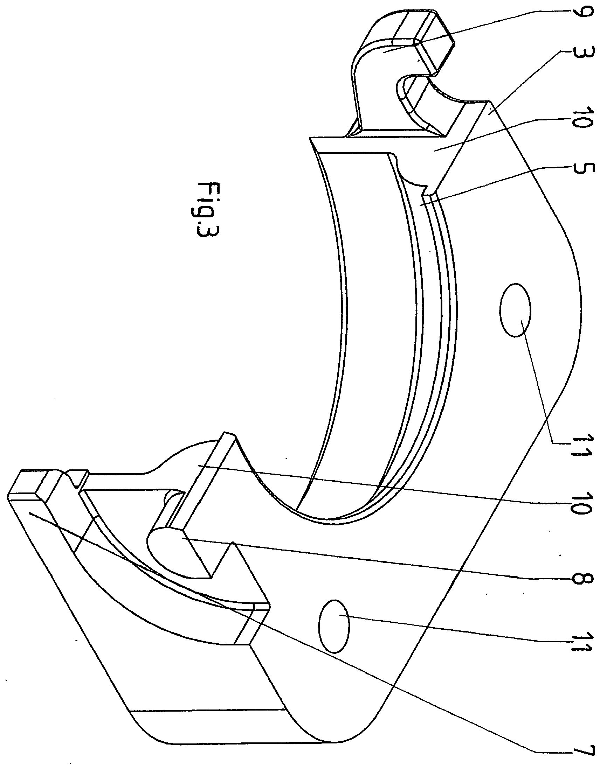

- Fig. 3: ein Halbflanschteil in isometrischer Ansicht;

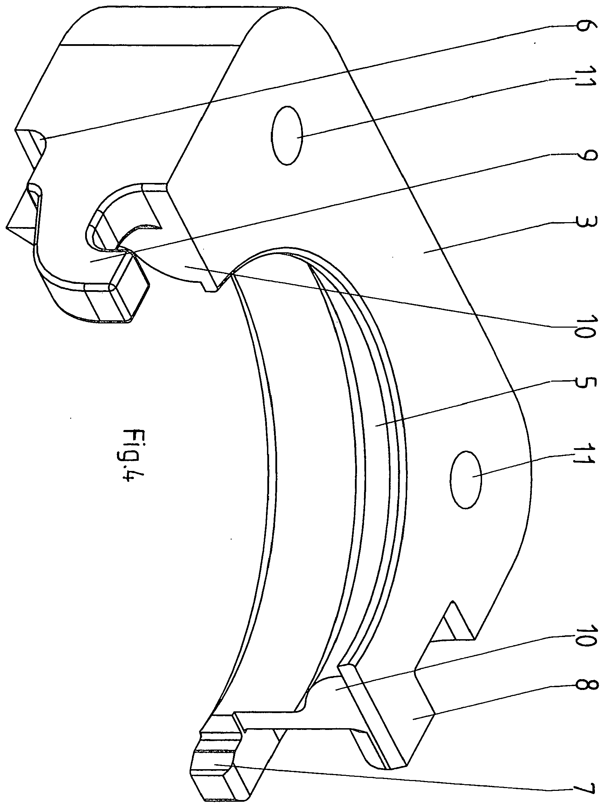

- Fig. 4: das Halbflanschteil in einer um 180° gegenüber der Darstellung in Figur 3 gedrehten Lage.

In der Zeichnung ist ein wesentliches Element einer Wanddurchführung gezeigt. Eine solche Wanddurchführung dient zur Verlegung von Langformteilen wie Rohren, Leitungen, Kabeln oder dergleichen durch Wandungen von Geräten, Gehäusen oder mit Wandungen versehenen Bauteilen. Die entsprechende Wandung weist eine Durchgangslochung auf. An der Wandung ist ein Flansch 1 mittels Befestigungsmittel befestigt. Der Flansch weist eine zur Durchgangslochung der Wandung koaxiale Lochung 2 auf. Bei der Montage wird der Flansch an der entsprechenden Gehäusewandung befestigt. Durch die Lochung 2 des Flansches 1 und die Durchgangslochung des Gehäuses können Langformteile beliebiger Art verlegt werden. Um eine nachträgliche Montage eines derartigen Flansches bei schon bestehenden Installationen zu ermöglichen, wenn beispielsweise ein Flansch beschädigt oder zerstört ist, ist erfindungsgemäß vorgesehen, dass der Flansch 1 aus zwei seine Lochung 2 mittig kreuzenden Halbflanschteilen 3 besteht, die mittels angeformter Verbindungsmittel 4 miteinander verbunden sind. Die Halbflanschteile 3 weisen dabei identische Form und die Hälfte der Lochung 2 auf. Sie sind also in dem identischen Werkzeug gefertigt. Auch die Lagerhaltung ist vereinfacht, da nur ein solches Teil bevorratet muss. Ebenso muss nur eine Art von Halbflanschteilen beim Monteur bevorratet sein, wenn dieser solche Teile montieren will.

Jedes Halbflanschteil 3 weist an der in Montagesolllage dem anderen Halbflanschteil 3 zugewandten Seite eine erste und eine zweite Trennstelle auf, die jeweils radial zur Lochung 2 ausgerichtet sind. Vorzugsweise ist in den aus den Halbflanschteilen 3 zusammengesetzten Flansch 1 eine ringartige Dichtung eingesetzt (in der Zeichnung nicht gezeigt), die in Montagesolllage zwischen einer Dicht-Press-Kontur 5 des Flansches 1, die dessen Lochung 2 umgibt, und dem die Durchgangslochung der Wandung umgebenden Wandungsteil eingespannt ist. Diese Dichtung wird durch die Kontur 5 gegen mindestens ein durchgeführtes Langformteil angepresst, sodass eine gute Abdichtung und gegebenenfalls sogar eine Zugentlastung erreicht wird.

Eine solche Dichtung besteht vorzugsweise aus einem geschlitzten Ringteil oder aus zwei Halbringteilen, die mit der Trennstelle oder den Trennstellen in Montagesolllage dicht aneinander liegen, um eine solche Dichtung auch bei bestehenden Installationen nachträglich einbringen oder auswechseln zu können.

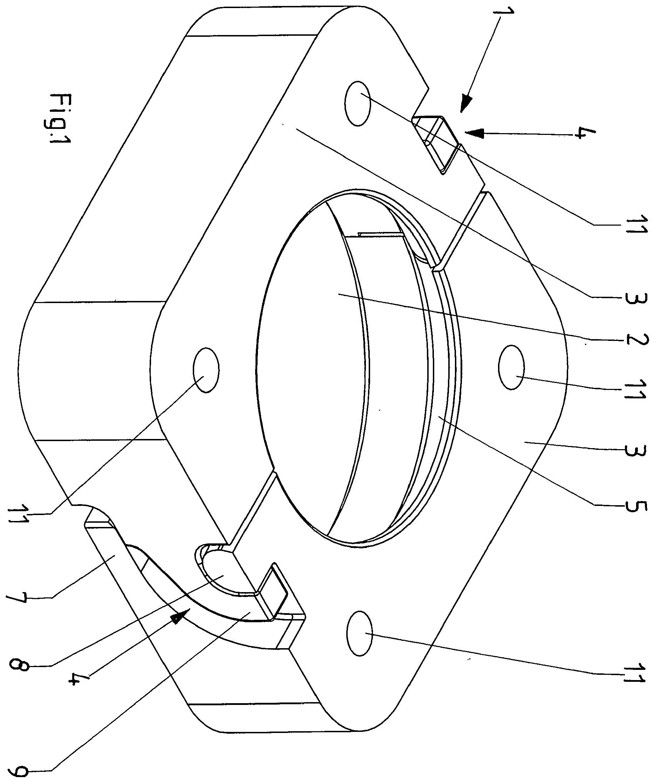

Die Trennstelle des Halbflanschteiles 3 weist an ihrer der Wandung des Gehäuses benachbarten Randkante eine Ausnehmung 6 auf, in die in Montagesolllage eine Verlängerung 7 des jeweils anderen Halbflanschteiles 3 eingreift. Im Ausführungsbeispiel ist das Verbindungsmittel 4 nach Art eines Scharniergelenkes ausgebildet, wobei jedes Halbflanschteil 3 an einer ersten Trennstelle seiner beiden Trennstellen einen Scharnierbolzen 8 und an einer zweiten Trennstelle ein Scharnierband 9 aufweist. In Montagesolllage, die in Figur 1 gezeigt ist, greift der Scharnierbolzen 8 des jeweils einen Halbflanschteiles 3 in das Scharnierband 9 des jeweils anderen Halbflanschteiles 3 ein. Die beiden Teile sind damit verriegelt.

An den Trennstellen der Halbflanschteile 3 sind parallel zur Trennebene gerichtete Wandteile 10 ausgebildet, die in Montagesolllage gemäß Figur 1 flächig aneinander liegen und eine Einsteckbegrenzung oder eine Schwenkbegrenzung für das Scharniergelenk bilden.

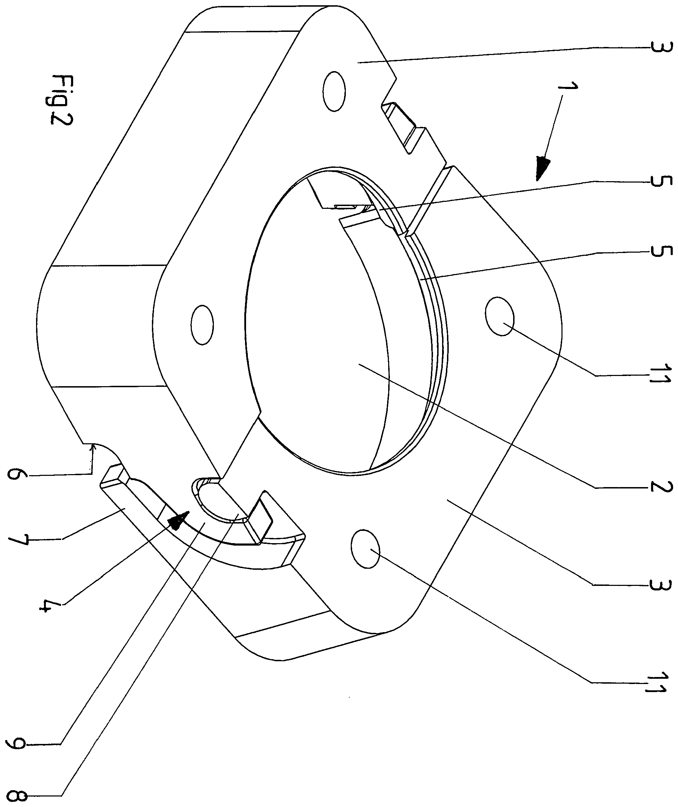

Das Scharnierband 9 ist durch eine zur Vorderseite des Halbflanschteiles 3, die in der Montagesolllage der Wandung abgewandt ist, offene Lagerschale ausgebildet. Zur Montage der Halbflanschteile 3 können die Halbflanschteile 3 zueinander positioniert werden, wie in Figur 2 gezeigt. Anschließend werden die beiden Teile so zueinander verschwenkt, dass sie mit Oberseite und Unterseite parallel zueinander ausgerichtet sind, wie in Figur 1 verdeutlicht ist.

Der aus den Halbflanschteilen 3 zusammengesetzte Flansch weist zusätzlich zur Durchgangsbohrung 2 zum Durchführen von Langformteilen und dergleichen mehrere Durchgangsöffnungen 11 auf, die dazu bestimmt sind, dass hierdurch Befestigungsmittel, beispielsweise Schrauben eingesteckt werden können, mittels derer der Flansch 1 an der Gehäusewandung befestigt werden kann.

Im Ausführungsbeispiel ist der Flansch 1 in Draufsicht quadratisch ausgebildet, wobei die Befestigungsmittel, bzw. die dazu gehörigen Durchgangsöffnungen 11 in den Eckbereichen angeordnet sind.

Die Erfindung ist nicht auf das Ausführungsbeispiel beschränkt, sondern im Rahmen der Offenbarung vielfach variabel.

## Patentansprüche

1. Wanddurchführung zur Verlegung von Langformteilen, Rohren, Leitungen und/oder Kabeln durch Wandungen von Geräte, Gehäusen oder mit Wandungen versehenen Bauteilen, wobei die Wandung eine Durchgangslochung aufweist und wobei die Wanddurchführung einen Flansch (1) umfasst, der an der Wandung mittels Befestigungsmitteln befestigbar ist und der eine zur Durchgangslochung koaxiale Lochung (2) aufweist, wobei der Flansch (1) aus zwei seine Lochung (2) mit einer Trennebene mittig kreuzenden Halbflanschteilen (3) besteht, die mittels angeformter Verbindungsmittel (4) miteinander verbunden oder verbindbar sind, und die Halbflanschteile (3) identische Form haben, wobei jedes Halbflanschteil (3) an einer Trennstelle ein erstes Verbindungsmittel und an einer zweiten Trennstelle ein zweites Verbindungsmittel aufweist und die Verbindungsmittel zueinander unterschiedlich aber miteinander in Montagesolllage der Halbflanschteile (3) kompatibel sind, **dadurch gekennzeichnet, dass** die Verbindungsmittel (4) nach Art eines Scharniergelenkes ausgebildet sind, wobei jedes Halbflanschteil (3) an einer ersten Trennstelle seiner beiden Trennstellen einen Scharnierbolzen (8) und an einer zweiten Trennstelle ein Scharnierband (9) aufweist, wobei in Montagesolllage der Scharnierbolzen (8) des jeweils einen Halbflanschteiles (3) in das Scharnierband (9) des jeweils anderen Halbflanschteiles (3) eingreift und die beiden Teile damit verriegelt sind.

2. Wanddurchführung nach Anspruch 1, **dadurch gekennzeichnet, dass** in den aus den Halbflanschteilen (3) zusammengesetzten Flansch (1) eine ein- oder mehrteilige ringartige Dichtung eingesetzt ist, die in Montagesolllage zwischen einer Dicht-Press-Kontur (5) des Flansches (1), die dessen Lochung (2) umgibt, und dem die Durchgangslochung der Wandung umgebenden Wandungsteil eingespannt ist und in radialer Richtung an das durchgeführte Langformteil oder die durchgeführten Langformteile angepresst ist.

3. Wanddurchführung nach einem Anspruch 2, **dadurch gekennzeichnet, dass** die Dichtung aus zwei Halbringteilen besteht, die mit den Trennstellen in Montagesolllage dicht aneinander liegen.

4. Wanddurchführung nach Anspruch 2, **dadurch gekennzeichnet, dass** die Dichtung aus einem mindestens einmal geschlitzten Ringteil besteht, das mit der Trennstelle oder den Trennstellen in Montagesolllage dicht aneinander liegt.

5. Wanddurchführung nach einem der Ansprüche 1 bis 4, **dadurch gekennzeichnet, dass** die Trennstelle des Halbflanschteiles (3) an ihrer der Wandung benachbarten Randkante eine Ausnehmung (6) aufweist, in die in Montagesolllage eine Verlängerung (7) des anderen Halbflanschteiles (3) eingreift, die eine Verlängerung einer Führungskontur ist.

6. Wanddurchführung nach einem der Ansprüche 1 bis 5, **dadurch gekennzeichnet, dass** an den Trennstellen der Halbflanschteile (3) parallel zur Trennebene gerichtete Wandteile (10) ausgebildet sind, die in der Montagesolllage flächig aneinander liegen und eine Schwenkbegrenzung für das Scharniergelenk bilden.

7. Wanddurchführung nach einem Anspruch 1 oder 6, **dadurch gekennzeichnet, dass** das Scharnierband (9) durch eine zur Vorderseite des Halbflanschteiles (3), die der Wandung abgewandt ist, offene Lagerschale gebildet ist.

8. Wanddurchführung nach einem der Ansprüche 1 bis 7, **dadurch gekennzeichnet, dass** der aus den Halbflanschteilen (3) zusammengesetzte Flansch (1) mehrere Durchgangsöffnungen (11) aufweist, die neben der Lochung (2) und achsparallel zu dieser angeordnet sind und in Montagesolllage von den Befestigungsmitteln durchgriffen sind.

9. Wanddurchführung nach einem der Ansprüche 1 bis 8, **dadurch gekennzeichnet, dass** die Befestigungsmittel Schrauben sind.

10. Wanddurchführung nach einem der Ansprüche 1 bis 9, **dadurch gekennzeichnet, dass** der Flansch (1) in Draufsicht rechteckig, vorzugsweise quadratisch ausgebildet ist, wobei die Befestigungsmittel in den Eckbereichen angeordnet sind.

## Claims

1. Wall duct for laying long-form-parts, tubes, wires and/or cables through walls of devices, housings or components provided with walls, whereby the wall has a through-hole and whereby the wall duct comprises a flange (1) which can be attached to the wall by attachment means and which has a hole (2) that is coaxial with the through-hole, whereby the flange (1) comprises two semi-flange parts (3) crossing its hole centrally with a parting plane, whereby the semi-flange parts (3) are joined or can be joined with each other by way of moulded-on joining means (4) and the semi-flange parts (3) are identical in shape, whereby each semi-flange part (3) has a first joining means at one separating point and a second joining means at a second separating point and the joining means are different from each other but are compatible with each other at the target mounting position of the semi-flange parts (3) **characterized by, that** the joining means (4) are formed in the manner of a hinge joint, whereby each semi-flange part (3) has a hinge pin (8) at a first separating point of its two separating points and a flap hinge (9) at a second separating point, whereby in the target mounting point the hinge pin (8) of the respective one semi-flange part (3) grasps into the flap hinge (9) of the respective other semi-flange part (3) so that the two parts are thus locked.

2. Wall duct according to Claim 1, **characterized by, that** a single-part or multi-part ring-type seal is inserted into the flange (1) comprising the two semi-flange parts (3), whereby in the target mounting position the ring-type seal is clamped between a seal-press contour (5) of the flange (1), which envelops its hole (2), and the wall part enveloping the through-hole, and which in radial direction is pressed against the inserted long-form-part or the inserted long-form-parts.

3. Wall duct according to a Claim 2, **characterized by, that** the seal comprises two semi-ring parts, which in the target mounting position closely lie together with the separating parts.

4. Wall duct according to Claim 2, **characterised by, that** the seal consists of a ring part that has been slit at least once, whereby in the target mounting position the ring part is closely lying together with the separating point or the separating points.

5. Wall duct according to one of the Claims 1 through 4, **characterised by, that** the separating point of the semi-flange part (3) has on its boundary edge adjacent to the wall, a recess (6) into which, in the target mounting position, grasps an extension (7) of the other semi-flange part (3), which is an extension of a guide contour.

6. Wall duct according to one of Claims 1 through 5, **characterised by, that** at the separating points of the semi-flange parts (3) there are wall parts (10) formed in parallel alignment to the separating plane, whereby in the target mounting position said wall parts lie flat against each other and form a swivel limitation for the hinge joint.

7. Wall duct according to one of Claims 1 or 6, **characterized by, that** the flap hinge (9) is formed by a bearing shell that is open towards the front side of the semi-flange part (3), which is turned away from the wall.

8. Wall duct according to one of Claims 1 through 7, **characterized by, that** the flange (1) made up of the semi-flange parts (3) has several passageway openings (11), which are arranged next to the hole (2) and axially parallel to it and where, in the target mounting position, fastening means grasp through.

9. Wall duct according to one of Claims 1 through 8, **characterized by, that** the fastening means are screws.

10. Wall duct according to one of Claims 1 through 9, **characterized by, that** the flange (1), in top view, is formed rectangularly, preferably squarely, whereby the fastening means are arranged in the corner areas.

## Revendications

1. Traversée murale, destinée à la pose de pièces formées allongées, de tuyaux, de lignes et/ou de câbles à travers les parois d'appareils, de boîtiers ou de composants dotés de parois, la paroi présentant un trou traversant et la traversée murale entourant une bride (1) que l'on peut fixer sur la paroi à l'aide de moyens de raccordement et qui présente une perforation coaxiale par rapport au trou traversant (2), la bride (1) se composant de deux éléments de demi-brides (3) qui croisent sa perforation (2) de manière centrale (3) et qui sont dotés d'un plan de séparation et étant reliés ou pouvant être reliés entre eux à l'aide de moyens de raccordement formés (4), et les éléments de demi-bride (3) ayant une forme identique, chaque élément de demi-bride (3) présentant au niveau du point de rupture un premier moyen de raccordement et au niveau d'un second point de rupture un second moyen de raccordement, et les moyens de raccordement étant différents les uns par rapport aux autres mais étant compatibles dans la position théorique de montage des éléments de demi-brides (3), la traversée murale **se caractérisant par le fait que** les moyens de raccordement (4) sont formés comme une articulation à charnières, chaque élément de demi-bride (3) présentant au niveau d'un premier point de rupture de ses deux points de rupture un boulon à charnières (8) et au niveau d'un second point de rupture une bande à charnières (9), le boulon à charnières (8) de respectivement l'un des éléments de demi-bride (3) pénétrant dans la position de montage théorique dans la bande à charnières (9) de respectivement l'autre élément de demi-bride (3), les deux éléments étant ainsi verrouillés.

2. Traversée murale conformément à la demande de brevet 1, **celle-ci se caractérisant par le fait que** l'on installe dans la bride (1) se composant des éléments de demi-brides (3) un joint de type annulaire à une ou plusieurs pièces, celui-ci étant enserré dans la position théorique de montage entre un contour à étancher et à presser (5) de la bride (1), celui-ci entourant sa perforation (2) et l'élément de paroi qui entoure le trou traversant de la paroi et qui dans la direction radiale est pressé contre la pièce formée allongée introduite ou contre les pièces formées allongées introduites.

3. Traversée murale conformément à la demande de brevet 2, **celle-ci se caractérisant par le fait que** le joint se compose de deux éléments en demi-anneau qui dans la position théorique de montage sont proches des points de rupture.

4. Traversée murale conformément à la demande de brevet 2, **celle-ci se caractérisant par le fait que** le joint se compose d'une pièce annulaire qui est fendue au moins une fois et qui dans la position de montage théorique est proche du point de rupture ou des points de rupture.

5. Traversée murale conformément à l'une des demandes de brevet 1 à 4, **celle-ci se caractérisant par le fait que** le point de rupture de l'élément de demi-bride (3) présente au niveau de son bord voisin de sa paroi un évidement (6) dans lequel dans la position théorique de montage pénètre une rallonge (7) de l'autre élément de demi-bride (3), celle-ci prolongeant un contour de guidage.

6. Traversée murale conformément à l'une des demandes de brevet 1 à 5, **celle-ci se caractérisant par le fait qu'**au niveau des points de rupture des éléments de demi-bride (3) se forment des éléments de paroi (10), ceux-ci étant orientés parallèlement par rapport au plan de séparation et qui dans la position théorique de montage reposent à plat et qui forment une plage de pivotement pour l'articulation à charnières.

7. Traversée murale conformément à l'une des demandes de brevet 1 ou 6, **celle-ci se caractérisant par le fait que** la bande à charnières (9) est formée par un coussinet de palier ouvert vers la face avant de l'élément de demi-bride (3), celle-ci se détournant de la paroi.

8. Traversée murale conformément à l'une des demandes de brevet 1 à 7, **celle-ci se caractérisant par le fait que** la bride (1) qui se compose des éléments de demi-bride (3) présente plusieurs ouvertures traversantes (11) qui sont disposées à côté de la perforation (2) et de manière parallèle à l'axe par rapport à celle-ci et qui dans la position théorique du montage sont pénétrées par les moyens de raccordement.

9. Traversée murale conformément à l'une des demandes de brevet 1 à 8, **celle-ci se caractérisant par le fait que** les moyens de fixation sont des vis.

10. Traversée murale conformément à l'une des demandes de brevet 1 à 9, **celle-ci se caractérisant par le fait que** vue de dessus la bride (1) a une forme rectangulaire, de préférence carrée, les moyens de fixation étant disposés dans les zones d'angles.
